# EUROPÄISCHE PATENTANMELDUNG

(11) **EP 0 547 425 A1**
(43) Veröffentlichungstag der Anmeldung: **23.06.1993**
(21) Anmeldenummer: 92120469.9
(22) Anmeldetag: 01.12.1992
(51) Int. Cl.: E02B 8/02, E03F 5/14, B01D 33/073

(54) **Siebvorrichtung für Wasser- und Abwasserreinigungsanlagen**

(30) Priorität: 14.12.1991 DE 4141379
(71) Anmelder: PASSAVANT-WERKE AG, D-65322 Aarbergen 7 (DE)
(72) Erfinder: Seel, Karl, W-6209 Aarbergen 3 (DE)

(57) **Zusammenfassung**

Die für die Grobstoffsiebung von Kläranlageneinläufen vorgesehene Siebmaschine mit vertikalachsig umlaufender von außen beaufschlagter Siebtrommel (2) ist erfindungsgemäß dadurch gekennzeichnet, daß die Siebtrommel (2) aus in Umfangsrichtung gewickelten Siebstäben, die ein keilförmiges Profil haben, besteht. Dadurch können die Siebübergänge mit einer auf die Siebspalte abgestimmten Zahnleiste abgeschält werden.

## Beschreibung

Die Erfindung betrifft eine Siebvorrichtung für Wasser- und Abwasserreinigungsanlagen. Bei dieser Siebvorrichtung handelt es sich um eine um eine vertikale Antriebsachse umlaufende und von außen beaufschlagte Siebtrommel, die von einer spiralig verengten Zulaufkammer umgeben ist. Am gegen den Trommelumfang abgedichteten Ende des Zulaufkanals ist eine Abfuhröffnung für die abgeschälten Siebübergänge vorgesehen. Das gereinigte Wasser verläßt das Innere der Siebtrommel durch einen radial unten abgehenden Ablaufkanal (DE-U 1 689 058).

Die bekannte Siebtrommel, die unter der Bezeichnung "Zentrisieb" in großer Stückzahl eingebaut worden ist, besitzt als Siebelement ein Lochblech mit passender Lochgröße. Es hat sich im Betrieb gezeigt, daß ein Lochblech für die aus dem Abwasser abzusiebenden Stoffe ungünstig ist. Die Stoffe mit bestimmter Korngröße werden von der Schableiste in die Löcher gedrückt und dann doch im Reinwasser mit fortgetragen.

Die Aufgabe, diese bekannte Siebmaschine weiter zu verbessern, wird nun gemäß der Erfindung dadurch gelöst, daß die Siebtrommel aus in Umfangsrichtung gewickelten Siebstäben besteht. Derartige Siebtrommeln sind von selbstreinigenden Siebmaschinen bekannt, deren Trommel um eine horizontale Achse umläuft und in aufsteigenden oberen Quadranten beaufschlagt ist. Die Abnahme der Siebübergänge im oberen absteigenden Quadranten mittels Zahnleiste hat sich bewährt. Diese Technik wird nunmehr für vertikalachsige Siebmaschinen mit allseitig äußerer Beaufschlagung angewendet. Die Profile der Siebstäbe sind vorzugsweise trapezförmig mit nach innen abnehmender Dicke. Auf diese Weise werden Verstopfungen der Sieboberfläche vermieden. Es kann darüberhinaus vorteilhaft sein, eine Düsenreihe zum Abspritzen der Siebübergänge vorzusehen. Diese Düsenreihe verläuft vertikal und zielt von innen auf das letzte Viertel des Trommelinnenfläche. Die dort abgesprühten Grobstoffe gelangen auf jeden Fall in den Abzug für die Siebübergänge.

In den beiden Figuren ist ein Ausführungsbeispiel einer erfindungsgemäßen Siebmaschine in Achs- und Querachsschnitt dargestellt. Das Bauwerk 1 für die Siebtrommel 2 enthält eine einen spiralig verengten Zulaufkanal 3 umschließende Gehäusewand 4, ein Mittelbauwerk 5 für das Trommellager 6, eine Abfuhrleitung 7 für die Sieübergänge und eine Abzugsrinne 8 für das Reinwasser. Der Antrieb 9 der Siebtrommel erfolgt von einer Traverse 10 aus. Die Siebtrommel 2 ist über ein Speichenrad 11 mit der Antriebswelle 12 verbunden. Durch das Mittelbauwerk 5 ist noch die Zulaufleitung 13 für die Sprühdüsenreihe 14 verlegt, wobei die Düsenreihe sich über die Höhe der Siebtrommel 2 erstreckt.

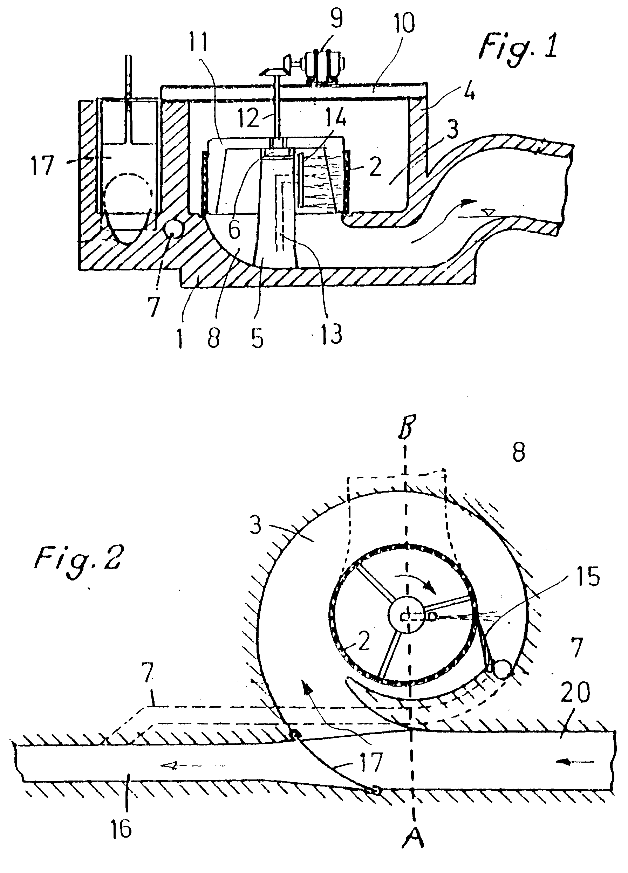

An der Grenze vom Anfang zum Ende des Zulaufkanals 3 liegt eine als Dichtung wirkende Schableiste 15, die mit Federn angedrückt wird. Die Schableiste führt in die unten vertikal abgehende Abfuhrleitung 7 für die Siebübergänge, die nach Figur 2 in den Überlaufkanal 16 mündet. Zulauf- (20) und Überlaufkanal 16 sind durch einen unterströmten, höheneinstellbaren Absenkschieber 17 getrennt, so daß die Siebmaschine nur bei Regenwetterzulauf beaufschlagt wird.

Die Abdichtung der Siebtrommelunterkante gegen die Außenkante der Abzugsrinne 8 ist gängige Technik.

## Patentansprüche

1. Siebvorrichtung für Wasser- und Abwasserreinigungsanlagen, die eine um eine vertikale Antriebsachse umlaufende, von außen beaufschlagte Siebtrommel und eine die Siebtrommel spiralig umgebende Zulaufkammer mit einer am abgedichteten Ende der Zulaufkammer vorgesehenen Abfuhröffnung der Siebübergänge enthält, **dadurch gekennzeichnet**, daß die Siebtrommel (2) aus in Umfangsrichtung gewickelten Siebstäben besteht.

2. Siebvorrichtung nach Anspruch 1, **dadurch gekennzeichnet**, daß die Siebstäbe ein keilförmiges Profil mit nach innen divergierender Dicke haben.

3. Siebvorrichtung nach Anspruch 1 oder 2, **dadurch gekennzeichnet**, daß zwischen Zulaufkanal (3) und Abfuhröffnung (7) für die Siebübergänge eine Dichtkante (15) vorgesehen ist, die eine den Siebspalten angepaßte Zahnleiste aufweist.

4. Siebvorrichtung nach Anspruch 1 bis 3, **dadurch gekennzeichnet**, daß eine innere, vertikal verlaufende Düsenreihe (14) zum Abspritzen der Siebübergänge im letzten Viertel des Zulaufkanals (3) vorgesehen ist.
